# NEUE EUROPÄISCHE PATENTSCHRIFT

(11) **EP 0 249 815 B2**
(45) Veröffentlichungstag und Bekanntmachung des Hinweises auf die Entscheidung über den Einspruch: **08.12.1999**
(45) Hinweis auf die Patenterteilung: 02.09.1992
(21) Anmeldenummer: 87108089.1
(22) Anmeldetag: 04.06.1987
(51) Int. Cl.: H01H 1/00, H02B 13/02

(54) **Einrichtung zur Erfassung von Störlichtbögen**
Fault arc detector device
Dispositif pour la détection d'arcs de défaut

(30) Priorität: 09.06.1986 CH 232286
(43) Veröffentlichungstag der Anmeldung: 23.12.1987
(73) Patentinhaber: ASEA BROWN BOVERI AG, 5400 Baden (CH)
(72) Erfinder: Fischer, Rudolf, CH-8173 Riedt b. Neerach (CH)

(56) Entgegenhaltungen:
- EP-A- 0 103 921
- EP-A- 0 126 270
- WO-A-80/01442
- DE-A- 2 840 790
- DE-A- 3 141 374
- ELEKTROTECHNISCHE ZEITSCHRIFT, E.T.Z., Band 105, Nr. 13, Juli 1984, Seiten 672-678, DE; G. SCHWARZ: "Schneller Störlichtbogenschutz für Schaltanlagen"
- Elektrotechnische Zeitung, E.T.Z, Band 104, Nr. 18, September 1983, Seiten 975-978; J. Hesse, M.Niegl, H. Stahl, "Begrenzung von Auswirkungen von inneren Lichtbogenstörungen."
- International Conference on Large High Voltage Electric Systems, 1.- 9.September 1982, O. Bosotti et al. Phenomena associated with switching cepacitive currents by disconnectors in metal enclosed SF6 insulated switchgear.

## Beschreibung

Bei der Erfindung wird ausgegangen von einer Einrichtung zur Erfassung von Störlichtbögen in einem mindestens einen elektrischen Schalter enthaltenden, abgedunkelten ersten Innenraum einer elektrischen Anlage nach dem ersten Teil von Patentanspruch 1.

Eine Einrichtung zur Erfassung von Störlichtbögen ist aus der EP-A1-0 126 270 bekannt. Die bekannte Einrichtung ermöglicht eine sichere Erfassung von unerwünschten Störlichtbögen in einer gasisolierten, metallgekapselten Hochspannungsschaltanlage. Bei der bekannten Einrichtung ist es jedoch erforderlich, durch betriebliche Schalthandlungen erzeugte Schaltlichtbögen während ihrer gesamten Brenndauer auszublenden. Während der Ausblendzeit ist es nicht mögliche Störlichtbögen zu erfassen, welche etwa infolge von Isolationsfehlern auftreten und zu Beschädigungen der gesamten Anlage führen können. Insbesondere bei Trenn- oder Erdungsschaltern sind wegen der bis zu einer Sekunde betragenden Brenndauer eines Schaltlichtbogens unerwünscht lange Ausblendzeiten erforderlich. Auf Seite 4 ist angegeben, daß bei Hochspannungs-Schaltanlagen das elektrische Schutzsystem in der Lage sein muß, Störlichtbogen-Entladungen sehr schnell, zum Beispiel innerhalb einiger Millisekunden zu erkennen.

In ELEKTROTECHNISCHE ZEITSCHRIFT, E.T.Z., Band 105, Nr. 13, Juli 1964, Seiten 672-678, DE ist in einem Aufsatz von G.Schwarz ein schneller Störlichtbogenschutz für Schaltanlagen beschrieben, bei dem die emittierte Strahlung von in Niederspannungs-Schaltanlagen auftretenden Lichtbögen detektiert und in zwei Phasen bewertet wird. In einer ersten Phase werden Strahlungsänderungen des emittierenden Lichtbogens innerhalb der ersten 3 Millisekunden bewertet, welche von niedrigen zu höheren Werten erfolgen. Ferner eine dynamische, von der Eingangsimpulsform und der vorwählbaren Höhe der Beleuchtungsänderung abhängige Verstärkung sowie das Frequenzband des Eingangssignals bewertet. In einer zweiten Phase wird das Vorhandenseins einer lichtbogentypischen Lichtstrahlung nach einer die Dauer von betriebsmässigen Wechselstrom-Schaltlichtbögen von Niederspannungs-Schaltgeräten übersteigenden Lichtbogenzeit von 20 Millisekunden bewertet und nach einer Nachbewertungsdauer von mindestens 5 Millisekunden auf das Vorhandensein oder Nichtvorhandensein eines Störlichtbogens erkannt.

Die hierbei eingesetzten Mittel enthalten zumindest den Flankenanstieg und die Amplitude lichtstrahlungsproportionaler elektrischer Signale erfassende Schwellwertdetektoren sowie eine die Ausgangssignale der Schwellwertdetektoren mit einer Zeitverzögerung von 20 Millisekunden verknüpfende Koinzidenzschaltung und ein der Koinzidenzschaltung nachgeordnetes und der Nachbewertung dienendes Zeitglied. Die Brenndauer eines Störlichtbogens kann hierbei auf 50 bis 60 Millisekunden begrenzt werden.

Die Erfindung, wie sie in Patentanspruch 1 gekennzeichnet ist, löst die Aufgabe, eine Einrichtung zur Erfassung von Störlichtbögen in einer elektrischen Anlage zu schaffen, welche es ermöglicht, ggfs. auftretende Störlichtbögen in einer gegenüber der Brenndauer eines Schaltlichtbogens eines Trenn- oder Erdungsschalters vergleichsweise kurzen Zeitspanne anzuzeigen.

Die Einrichtung nach der Erfindung ermöglicht eine selektive Ueberwachung einer elektrischen Anlage auf Störlichtbögen innerhalb eines Bruchteils der Brenndauer des Schaltlichtbogens eines Trenn- oder Erdungsschalters dieser Anlage. Hierdurch wird die Gefahr einer Beschädigung einer elektrischen Anlage durch Störlichtbögen wesentlich herabgesetzt. Vorteilhaft ist es darüber hinaus auch, dass bereits bestehende elektrische Anlagen problemlos nachgerüstet werden können.

Nachfolgend wird die Erfindung anhand eines in der Zeichnung dargestellten Ausführungsbeispiels näher erläutert.

Hierbei zeigt:
- Fig. 1: ein Blockschaltbild einer erfindungsgemäss ausgeführten Einrichtung zur Erfassung von Störlichtbögen in einer Hochspannungsschaltanlage,
- Fig. 2: das zeitliche Verhalten der Lichtstärke φ von Lichtbögen, welche im Innenraum der von der Einrichtung gemäss Fig. 1 überwachten Hochspannungsschaltanlage auftreten,
- Fig. 3: ein Schaltbild einer Schaltungsanordnung der Einrichtung gemäss Fig. 1 zur Erfassung von elektrischen Signalen, welche dem zeitlichen Verhalten der Lichtstärke φ zugeordnet sind, und
- Fig. 4: den zeitlichen Verlauf der elektrischen Signale in der Schaltungsanordnung gemäss Fig. 3.

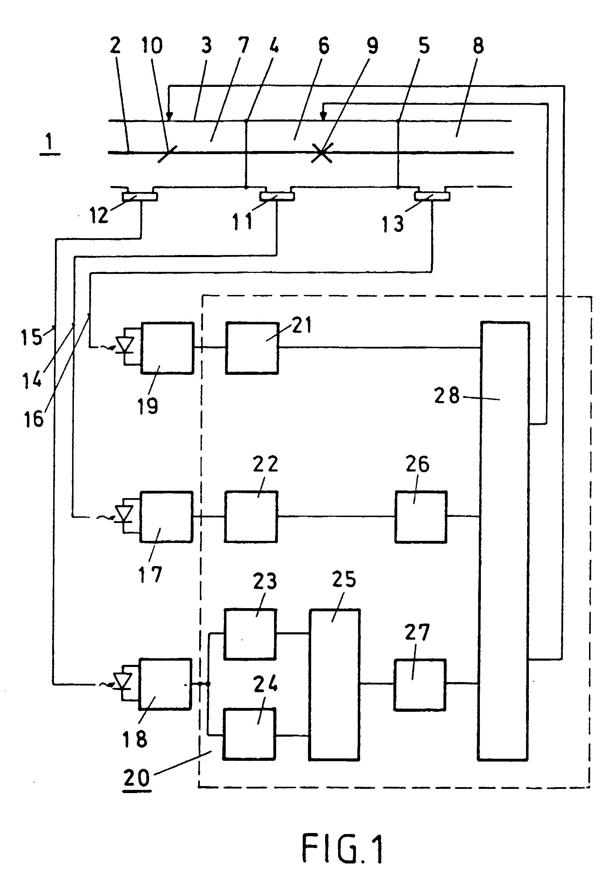

In Fig. 1 bezeichnet 1 eine metallgekapselte Hochspannungsschaltanlage mit einem hochspannungsführenden Leiter 2 und einer den Leiter 2 umschliessenden und mit einem Isoliergas gefüllten Metallkapselung 3. Der Leiter 2 ist von zwei Isolatoren 4, 5 getragen, welche in der Hochspannungsschaltanlage 1 drei abgedunkelte und gasdichte Innenräume 6, 7, 8 begrenzen. Im Innenraum 6 ist ein Hochspannungsleistungsschalter 9 und im Innenraum 7 ein Hochspannungstrenn- oder Hochspannungserdungsschalter 10 vorgesehen. Hingegen weist der Innenraum 8 kein Schaltgerät auf und kann beispielsweise einen Strom- oder Spannungswandler enthalten.

Die Metallkapselung 3 weist nicht bezeichnete und jeweils einem der Innenräume 6, 7, 8 zugeordnete Oeffnungen auf, welche jeweils von transparenten Glasfenstern 11, 12, 13 gasdicht abgeschlossen sind. Auf den Aussenflächen der Glasfenster 11, 12, 13 sind jeweils nicht bezeichnete, lichtabweisende Schichten und jeweils ein Ende eines von drei Lichtleitern 14, 15, 16 angebracht. Das andere Ende jedes der drei Lichtleiter wirkt jeweils auf den Eingang eines von drei optoelektronischen Wandlern 17,18, 19.

Die Ausgänge der optoelektronischen Wandler 17, 18, 19 wirken jeweils auf Eingänge einer Auswertevorrichtung 20 zur Verarbeitung der von den optoelektronischen Wandlern 17, 18, 19 gelieferten elektrischen Signale nach bestimmten, nachfolgend beschriebenen Kriterien. Diese Kriterien erlauben es, zwischen Lichtimpulsen zu unterscheiden, welche von regulären - etwa beim Oeffnen oder Schliessen des Hochspannungsleistungsschalters 9 auftretenden - Schaltlichtbögen oder unerwünschten - etwa bei Isolationsüberschlägen auftretenden - Störlichtbögen herrühren. Wird ein Störlichtbogen festgestellt, so bildet die Auswertevorrichtung 20 ein Ausgangssignal, welches auf den Störlichtbogen kurzschliessende Komponenten, wie etwa einen nicht dargestellten Schnellerdungsschalter, der Hochspannungsschaltanlage 1 wirkt.

Die Auswertevorrichtung 20 weist vier die elektrischen Ausgangssignale der optoelektronischen Wandler 17, 18, 19 aufnehmende Schwellwertdetektoren 21, 22, 23, 24 auf sowie eine Koinzidenzschaltung 25, zwei Zeitglieder 26 und 27 und eine lmpulsverarbeitungseinheit 28. Hierbei steht der Schwellwertdetektor 21 eingangsseitig mit dem Ausgang des optoelektronischen Wandlers 19 und ausgangsseitig mit einem Eingang der lmpulsverarbeitungseinheit 28 in Wirkverbindung,
entsprechend der Schwellwertdetektor 22 eingangsseitig mit dem Ausgang des optoelektronischen Wandlers 17 und ausgangsseitig über das Zeitglied 26 mit einem weiteren Eingang der Impulsverarbeitungseinrichtung 28 und die Schwellwertdetektoren 23 und 24 eingangsseitig jeweils mit dem Ausgang des optoelektronischen Wandlers 18 und ausgangsseitig jeweils mit einem von zwei Eingängen der Koinzidenzschaltung 25. Der Ausgang der Koinzidenzschaltung 25 wirkt über das Zeitglied 27 auf die lmpulsverarbeitungseinheit 28.

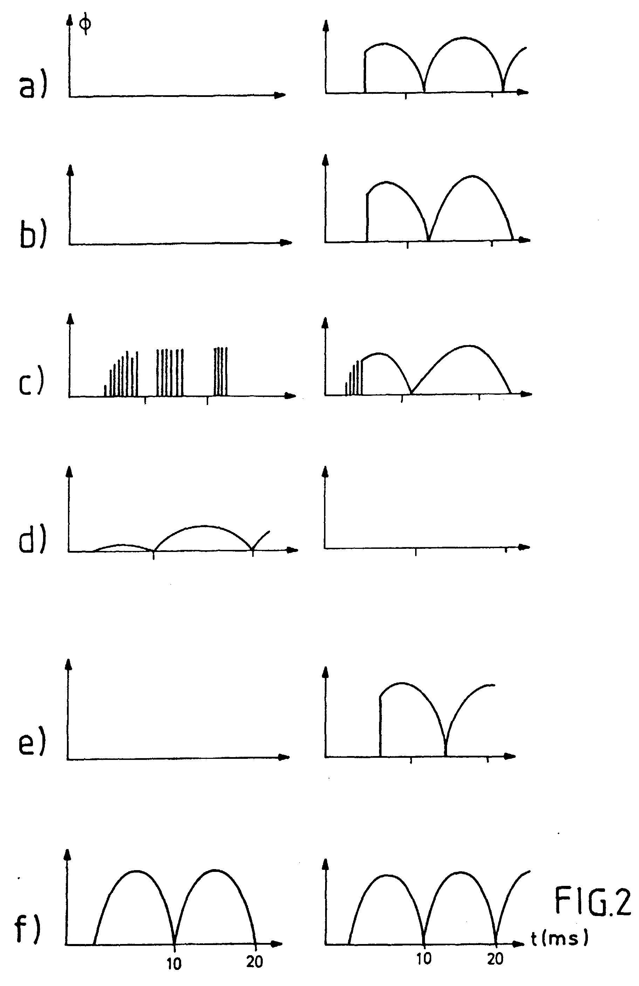

In Fig. 2 ist das zeitliche Verhalten der Lichtstärke φ von Lichtbögen dargestellt, welche in den Innenräumen 6, 7 und 8 der Hochspannungsschaltanlage 1 auftreten können.

Im schalterfreien Innenraum 8 tritt bei einer Schalthandlung der Hochspannungsschaltanlage kein Schaltlichtbogen auf. Der Innenraum 8 bleibt daher dunkel (Fig. 2 (a), linkes Bild).

Im Fehlerfall tritt im Innenraum 8 ein Störlichtbogen auf, dessen Lichtstärke in Abhängigkeit von der Frequenz des im Leiter 2 geführten Stromes schwankt (Fig. 2 (a), rechtes Bild).

Im Innenraum 7 mit dem Hochspannungstrenn- oder Hochspannungserdungsschalter 10 ist es ohne Schalthandlung normalerweise dunkel (Fig. 2 (b), linkes Bild).

Beim Schalten eines kapazitiven Stromes tritt ein Schaltlichtbogen mit kurzen, steilen Lichtimpulsen auf. Bezieht man die nachfolgend angegebene optische Leistung auf eine Photodiode eines optoelektronischen Wandlers bei indirekter Beobachtung des Lichtbogens aus ca. 1 m Entfernung unter Verwendung eines Lichtleiters mit geringer Dämpfung und mit einem Durchmesser von 200 µm, so weisen diese Lichtimpulse typischerweise eine Lichtstärkenänderung dφ/dt > 10 nW/µs und eine Dauer von jeweils höchstens 150 µs auf (Fig. 2 (c), linkes Bild).

Beim Schalten eines induktiven Stromes tritt ein Schaltlichtbogen mit langandauernden und langsam ansteigenden Lichtimpulsen auf. Unter den Voraussetzungen der vorstehend angegebenen Messbedingungen weisen solche Lichtimpulse eine Lichtstärkenänderung dφ/dt < 1 nW/µs und eine Dauer grösser 1 ms auf (Fig. 2 (d), linkes Bild).

Im Fehlerfall tritt im Innenraum 7 sowohl im Ruhezustand (Fig. 2 (b), rechtes Bild) als auch beim Schalten eines kapazitiven Stromes (Fig. 2 (c), rechtes Bild) mindestens ein von einem Störlichtbogen herrührender Lichtimpuls auf, welcher länger als 1 ms dauert und eine Lichtstärkenänderung grösser 10 nW/µs aufweist.

Da das Auftreten eines Störlichtbogens beim Schalten eines induktiven Stromes unwahrscheinlich ist, kann ein solcher Fehlerfall ausgeschlossen werden (Fig. 2 (d), rechtes Bild).

Im Innenraum 6 mit dem Hochspannungsleistungsschalter 9 ist es im Ruhezustand normalerweise dunkel (Fig. 2 (e), linkes Bild).

Bei einer Schalthandlung treten vom Schaltlichtbogen herrührende langandauernde Lichtimpulse auf, welche bereits nach 25 ms abgeklungen sind (Fig. 2 (f), linkes Bild).

Im Fehlerfall treten sowohl im Ruhezustand (Fig. 2 (e), rechtes Bild) als auch bei einer Schalthandlung Störlichtbögen (Fig. 2 (f), rechtes Bild) auf, welche auch noch nach 25 ms brennen.

Tritt nun im Innenraum 8 ein Störlichtbogen auf, so werden dessen Lichtimpulse vom Sensor 13 erfasst und über den Lichtleiter 16 dem optoelektronischen Wandler 19 zugeführt. Die vom Wandler 19 aus den Lichtimpulsen erzeugten elektrischen Signale wirken auf den Schwellwertdetektor 21. Der Schwellwertdetektor 21 spricht oberhalb eines vorgegebenen Grenzwertes der Amplitude der elektrischen Signale an und gibt an die Impulsverarbeitungseinrichtung 28 ein das Auftreten eines Störlichtbogens anzeigendes Fehlersignal ab.

Tritt in dem den Hochspannungsleistungsschalter 9 enthaltenden Innenraum 6 ein Lichtbogen auf, so kann es sich hierbei um einen Schaltlichtbogen, einen Storlichtbogen oder um einen Schalt- und einen Störlichtbogen handeln. Anhand der vorstehend angegebenen Kriterien kann nun in einfacher Weise entschieden werden, ob ein Störlichtbogen brennt oder nicht. Hierbei werden die über den Sensor 11 und den Lichtleiter 14 an den optoelektronischen Wandler 17 abgegebenen Lichtimpulse in elektrische Signale umgewandelt. Der Schwellwertdetektor 22 gibt oberhalb eines vorgegebenen Grenzwertes der Amplitude der elektrischen Signale ein auf das Zeitglied 26 wirkendes Ausgangssignal ab. Wirkt dieses Signal auch noch nach einer vorgegebenen Zeitdifferenz, von beispielsweise 25 ms, auf das Zeitglied 26, so gibt dieses an die lmpuslverarbeitungseinheit 28 ein einen Störlichtbogen signalisierendes Signal ab. Ist das Ausgangssignal jedoch - bei einer regulären Schalthandlung - vor Ablauf dieser Zeitdifferenz, beispielsweise nach 5 oder 10 ms verschwunden, so gibt das Zeitglied 26 kein Signal ab.

Tritt in dem den Hochspannungstrenn- oder Hochspannungserdungsschalter 10 enthaltenden Innenraum 7 ein Lichtbogen auf, so kann es sich auch in diesem Fall um einen Schaltlichtbogen, einen Störlichtbogen oder um einen Schalt- und einen Störlichtbogen handeln. Anhand der vorstehend angegebenen Kriterien kann auch in diesem Fall in einfacher Weise entschieden werden, ob ein unerwünschter Störlichtbogen brennt. Hierbei werden die über den Sensor 12 und den Lichtleiter 15 dem optoelektronischen Wandler 18 zugeführten Lichtimpulse in elektrische Signale umgewandlet. Der Schwellwertdetektor 23 gibt oberhalb eines vorgegebenen Grenzwertes des Flankenanstiegs der elektrischen Signale ein auf einen ersten Eingang der Koinzidenzschaltung 25 wirkendes Ausgangssignal ab. Der Schwellwertdetektor 24 gibt oberhalb eines vorgegebenen Grenzwertes der Amplitude der elektrischen Signale ein auf einen zweiten Eingang der Koinzidenzschaltung 25 wirkendes Ausgangssignal ab. Der Ausgang der Koinzidenzschaltung 25 wird aktiv, wenn beim Auftreten einer positiven Flanke am zweiten Eingang am ersten Eingang ein Signal anliegt. Der Ausgang der Koinzidenzschaltung 25 bleibt solange aktiv wie ihr mit dem Ausgang des Schwellwertdetektors 24 verbundener zweiter Eingang aktiviert ist. Während dieser Zeit hat der mit dem Ausgang des Schwellwertdetektors 23 verbundene erste Eingang keinen Einfluss auf das Verhalten der Koinzidenzschaltung 25. Das Zeitglied 27 prüft beim Auftreten eines Ausgangssignals an der Koinzidenzschaltung, ob dieses Signal länger als eine vorgegebene Zeitdifferenz, von beispielsweise 1 ms,dauert. Ist dies der Fall, so gibt es ein das Auftreten eines Störlichtbogens signalisierendes Signal an die lmpulsverarbeitungseinheit 28 ab.

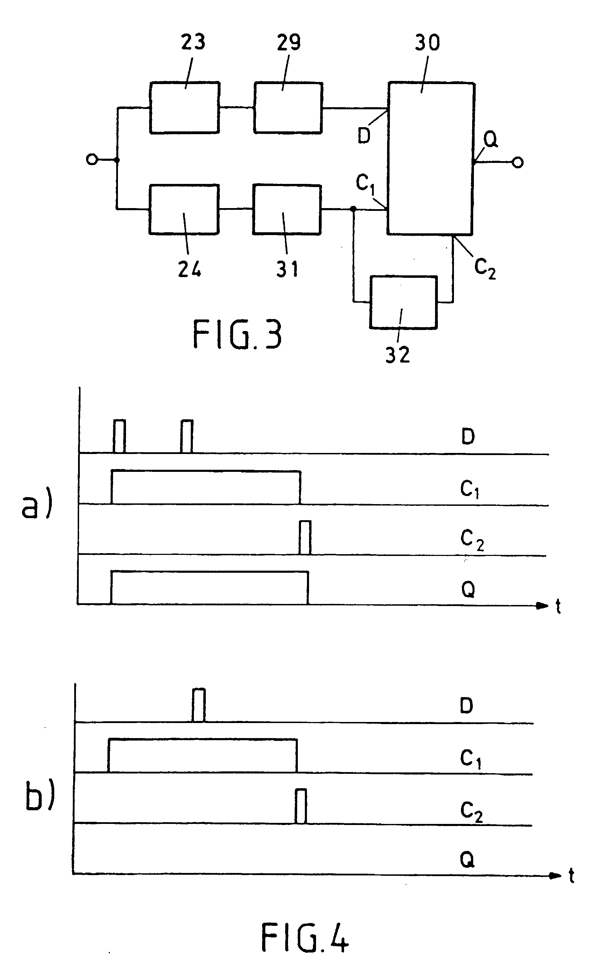

In Fig. 3 ist ein Schaltbild einer zur Verarbeitung der vom optoelektronischen Wandler 18 gelieferten elektrischen Signale geeigneten Schaltungsanordnung angegeben. Bei dieser Schaltungsanordnung wirkt der Ausgang des Schwellwertdetektors 23 über ein positiv flankengetriggertes Monoflop 29 mit einer Signalbreite von beispielsweise 1 Us auf einen Dateneingang D eines positiv flankengetriggerten D-Flip-Flops 30 und der Ausgang des Schwellwertdetektors 24 über ein Verzögerungsglied 31 mit einer Signalverzögerungszeit von beispielsweise 0,5 µs einerseits auf einen Takteingang C₁ des D-Flip-Flops 30 und andererseits über ein negativ flankengetriggertes Monoflop 32 mit einer Signalbreite von beispielsweise 1 µs auf einen Freischalteeingang C₂ des D-Flip-Flops 30.

Tritt nun, wie in Fig. 4 (a) dargestellt, am Takteingang C₁ ein Signal mit einer positiven Flanke auf, so gelangt das am Dateneingang D anstehende Signal an den Ausgang Q (Koinzidenzwirkung). Ein am Ausgang Q gebildetes Signal bleibt solange bestehen, solange am Takteingang C₁ ein positives Signal besteht und damit keine negative Flanke des am Takteingang C₁ angelegten Signals über das Monoflop 32 auf den Freischalteausgang C₂ wirkt. Ist das von der Lichtbogendauer abhängige Taktsignal länger als die vorgegebene Zeitdifferenz,von beispielsweise 1 ms, so gibt das in Fig. 3 nicht dargestellte Zeitglied 27, ein das Auftreten eines Störlichtbogens anzeigendes Fehlersignal an die lmpulsverarbeitungseinheit 28 weiter. Kommt die negative Flanke des am Takteingang C₁ und am Monoflop 32 anstehenden Signals zur Wirkung, so gibt das negativ flankengetriggerte Monoflop 32 ein auf den Freischalteeingang C₂ des D-Flip-Flops 30 wirkendes Signal ab, wodurch der Ausgang Q des D-Flip-Flops 30 wieder freigeschaltet wird.

Treten, wie in Fig. 4 (b) dargestellt, das am Dateneingang D anliegende Signal und die am Takteingang C₁ anstehende Flanke nicht gleichzeitig auf (etwa bei einer impulsartigen Störung), so gelangt an den Ausgang Q des D-Flip-Flops 30 kein Ausgangssignal und es wird auch kein einen Störlichtbogen anzeigendes Fehlersignal gebildet.

## Patentansprüche

1. Einrichtung zur Erfassung von Störlichtbögen in einem mindestens einen elektrischen Schalter enthaltenden,abgedunkelten ersten Innenraum (7) einer elektrischen Anlage mit mindestens
- einem ersten optischen Sensor (12) zur Erfassung der Lichtimpulse von Lichtbögen im ersten Innenraum,
- einem ersten Leiter (15) zur Ausleitung der vom ersten Sensor erfassten Impulse aus dem ersten Innenraum (7),
- einem ersten optoelektronischen Wandler (18) zur Umwandlung der Lichtimpulse in erste elektrische Signale, welche sowohl auf Störlichtbögen als auch auf reguläre Schaltlichtbögen zurückzuführen sind, und
- einer Auswertevorrichtung (20) mit einer die ersten elektrischen Signale erfassenden Schaltungsanordnung, welche die auf Störlichtbögen zurückzuführenden elektrischen Signale von Signalen unterscheidet, die auf reguläre Schaltlichtbögen zurückzuführen sind, und welche einen vom Flankenanstieg der ersten elektrischen Signale gesteuerten ersten (23) und einen von der Amplitude der ersten elektrischen Signale gesteuerten zweiten Schwellwertdetektor (24) aufweist sowie eine Koinzidenzschaltung (25), auf deren ersten bzw. zweiten Eingang die Ausgänge des ersten bzw. des zweiten Schwellwertdetektors wirken, und ein der Koinzidenzschaltung (25) nachgeschaltetes erstes Zeitglied (27) zur Prüfung der Dauer eines in der Koinzidenzschaltung erzeugten Ausgangssignals und zur Abgabe eines das Vorhandensein eines Störlichtbogens anzeigenden Signals,
dadurch gekennzeichnet, daß der erste Leiter (15) ein Lichtleiter ist und der optoelektronische Wandler (18) die Lichtimpulse nach ihrer Übertragung über den Lichtleiter in die ersten elektrischen Signale umwandelt, daß die Koinzidenzschaltung (25) so ausgebildet ist, daß das Ausgangssignal erzeugt wird, wenn beim Auftreten einer positiven Flanke am zweiten Eingang am ersten Eingang ein Signal anliegt, und das Ausgangssignal lange aktiv bleibt wie das vom zweiten Schwellwertdetektor (24) abgegebene Signal anliegt, und daß bei Ausbildung des Schalters als Hochspannungstrenn- oder Hochspannungserdungsschalter (10) das erste Zeitglied (27) nach einer Prüfdauer von ca 1 Millisekunde
einen beim Schalten eines kapazitiven Stroms auftretenden Störlichtbogen mit einem steil ansteigenden und langandauernden Lichtimpuls mit einer Impulsdauer grösser 1 Millisekunde anzeigt, jedoch
einen beim Schalten eines kapazitiven Stroms auftretenden Schaltlichtbogen mit steilen und kurzen Lichtimpulsen und
einen beim Schalten eines induktiven Stroms auftretenden Schaltlichtbogen mit demgegenüber langsam ansteigenden und langandauernden Lichtimpulsen mit einer Impulsdauer grösser 1 Millisekunde nicht anzeigt.

2. Einrichtung nach Anspruch 1, dadurch gekennzeichnet, dass die Koinzidenzschaltung (25) ein D-Flip-Flop (30) aufweist, auf dessen Dateneingang (D) der Ausgang des ersten Schwellwertdetektors (23) und auf dessen Takteingang (C₁) der Ausgang des zweiten Schwellwertedetektors (24) wirkt.

3. Einrichtung nach Anspruch 2, dadurch gekennzeichnet, dass zwischen dem ersten Schwellwertdetektor (23) und dem Dateneingang (D) des D-Flip-Flops (30) ein positiv flankengetriggertes Monoflop (29) und zwischen Takt (C₁)-und einem Freischalteeingang (C₂) des D-Flip-Flops (30) ein negativ flankengetriggertes Monoflop (32) geschaltet ist.

4. Einrichtung nach einem der Ansprüche 1 bis 3, mit einem in einem zweiten Innenraum (6) vorgesehenen Hochspannungsleistungsschalter (9) mit mindestens
- einem zweiten optischen Sensor (11) zur Erfassung der Lichtimpulse von Lichtbögen im zweiten Innenraum (6),
- einem zweiten Lichtleiter (14) zur Ausleitung der vom zweiten Sensor (11) erfassten Lichtimpulse aus dem zweiten Innenraum (6), und
- einem zweiten optoelektronischen Wandler (17) zur Umwandlung der ausgeleiteten Lichtimpulse in der Auswerteeinheit (20) zugeführte zweite elektrische Signale,
dadurch gekennzeichnet, dass die Schaltungsanordnung einen von der Amplitude der zweiten elektrischen Signale gesteuerten dritten Schwellwertdetektor (22) aufweist und ein dem dritten Schwellwertdetektor (22) nachgeschaltetes und die Dauer der zweiten elektrischen Signale prüfendes zweites Zeitglied (26).

5. Einrichtung nach Anspruch 4, mit einem dritten Innenraum (8) mit mindestens
- einem dritten optischen Sensor (13) zur Erfassung der Lichtimpulse von Lichtbogen im dritten Innenraum (8),
- einem dritten Lichtleiter (16) zur Ausleitung der vom dritten Sensor (13) erfassten Lichtimpulse aus dem dritten Innenraum (8), und
- einem dritten optoelektronischen Wandler (19) zur Umwandlung der ausgeleiteten Lichtimpulse in der Auswerteeinheit (20) zugeführte dritte elektrische Signale,
dadurch gekennzeichnet, dass die Schaltungsanordnung ein von der Amplitude der dritten elektrischen Signale gesteuerten vierten Schwellwertdetektor (21) aufweist.

## Claims

1. Device for detecting interfering arcs in a darkened first internal space (7), containing at least one electric switch, of an electric system comprising at least
- a first optical sensor (12) for detecting the light pulses of arcs in the first internal space,
- a first conductor (15) for conducting the pulses detected by the first sensor out of the first internal space (7),
- a first optoelectronic transducer (18) for converting the light pulses into first electrical signals, which can be attributed both to interfering arcs as well as to regular switching arcs, and
- an evaluating device (20) with a circuit arrangement which detects the first electrical signals, which distinguishes between the electrical signals attributable to interfering arcs and signals attributable to regular switching arcs, and which has a first threshold detector (23), controlled by the slope of the edge of the first electrical signals, and a second threshold detector (24), controlled by the amplitude of the first electrical signals, and a coincidence circuit (25), the first or second input of which is acted upon by the outputs of the first or of the second threshold detector, and a first timing section (27), connected downstream of the coincidence circuit (25), for checking the duration of an output signal produced in the coincidence circuit and for outputting a signal which indicates the presence of an interfering arc,
characterised in that the first conductor (15) is an optical waveguide and the optoelectronic transducer (18) converts the light pulses, after they have been transmitted via the optical waveguide, into the first electrical signals, in that the coincidence circuit (25) is designed such that the output signal is produced if there is a signal at the first input when a positive edge occurs at the second input, and the output signal remains active for as long as the signal output by the second threshold detector (24) is present, and in that, when the switch is designed as a high-voltage isolating or high-voltage earthing switch (10), the first timing section (27), after a checking time of approximately 1 ms, indicates an interfering arc which is produced when a capacitive current is switched and which has a steeply rising, long-lasting light pulse with a pulse duration of more than 1 ms, but does not indicate a switching arc which is produced when a capacitive current is switched and which has steep, short light pulses, and does not indicate a switching arc which is produced when an inductive current is switched and which, in contrast, has slowly rising, long-lasting light pulses with a pulse duration of more than 1 ms.

2. Device according to Claim 1, characterised in that the coincidence circuit (25) has a D-type flip flop (30), the data input (D) of which is acted upon by the output of the first threshold detector (23) and the clock input (C₁) of which is acted upon by the output of the second threshold detector (24).

3. Device according to Claim 2, characterised in that a positively edge-triggered monostable flip flop (29) is connected between the first threshold detector (23) and the data input (D) of the D-type flip flop (30), and a negatively edge-triggered monostable flip flop (32) is connected between clock input (C₁) and a clear input (C₂) of the D-type flip flop (30).

4. Device according to one of Claims 1 to 3, comprising a high-voltage circuit breaker (9), provided in a second internal space (6), containing at least
- a second optical sensor (11) for detecting the light pulses of arcs in the second internal space (6),
- a second optical waveguide (14) for conducting the light pulses detected by the second sensor (11) out of the second internal space (6), and
- a second optoelectronic transducer (17) for converting the light pulses conducted out into second electrical signals supplied to the evaluating unit (20),
characterised in that the circuit arrangement has a third threshold detector (22), controlled by the amplitude of the second electrical signals, and a second timing section (26) which follows the third threshold detector (22) and checks the duration of the second electrical signals.

5. Device according to Claim 4, comprising a third internal space (8) containing at least
- a third optical sensor (13) for detecting the light pulses of arcs in the third internal space (8),
- a third optical waveguide (16) for conducting the light pulses detected by the third sensor (13) out of the third internal space (8), and
- a third optoelectronic transducer (19) for converting the light pulses conducted out into third electrical signals supplied to the evaluating unit (20),
characterised in that the circuit arrangement has a fourth threshold detector (21) controlled by the amplitude of the third electrical signals.

## Revendications

1. Dispositif pour la détection d'arcs parasites dans un premier espace interne occulté (7) d'une installation électrique contenant au moins un commutateur électrique comportant au moins :
- un premier capteur optique (12) pour détecter les impulsions lumineuses d'arcs dans un premier espace interne ;
- un premier guide (15) pour faire sortir les impulsions détectées par le premier capteur hors du premier espace interne (7);
- un premier convertisseur optoélectronique (18) pour convertir les impulsions lumineuses en des premiers signaux électriques qui peuvent être attribués aussi bien à des arcs parasites qu'à des arcs de commutation réguliers, et
- un dispositif d'évaluation (20) comportant un montage de circuit captant les premiers signaux électriques qui fait la distinction entre les signaux électriques à attribuer à des arcs parasites et les signaux à attribuer à des arcs de commutation réguliers et qui comporte un premier détecteur à seuil (23) commandé par la montée des flancs des premiers signaux électriques et un deuxième détecteur à seuil (24) commandé par l'amplitude des premiers signaux électriques ainsi qu'un circuit de coïncidence (25) sur la première ou deuxième entrée duquel agissent les sorties du premier ou du deuxième détecteur à seuil, ainsi qu'un premier élément de temporisation (27) intercalé à la suite du circuit de coïncidence (25) pour vérifier la durée d'un signal de sortie produit dans le circuit de coïncidence et pour la transmission d'un signal indiquant la présence d'un arc parasite, caractérisé en ce que le premier guide (15) est un guide de lumière et le convertisseur optoélectronique (18) convertit les impulsions lumineuses après leur transfert par le guide de lumière en les premiers signaux électriques, et ce que le circuit de coïncidence (25) est conçu de telle sorte que le signal de sortie est produit lorsque, à l'apparition d'un flanc positif sue la deuxième entrée, un signal est présent sur la première entrée, et que le signal de sortie reste actif aussi longtemps que le signal livré par le deuxième détecteur à seuil (24) est présent, et en ce que lors de la conception du commutateur en tant que communicateur de sectionnement ou de mise à la terre à haute tension (10), le premier élément de temporisation (27) indique, après une durée de vérification d'environ 1 milliseconde lors de la commutation d'un courant capacitif, un arc parasite apparaissant avec une impulsion lumineuse très croissante et de longue durée avec und durée d'impulsion supérieure à une milliseconde, un arc électrique de commutation apparaissant cependant lors de la commutation d'un courant capacitif avec de raides et courtes impulsions lumineuses , et un arc électrique de commutation apparaissant lors de la commutation d'un courant inductif, avec au contraire des impulsions lumineuses lentement croissantes et de longue durée avec une durée d'impulsion supérieure à 1 milliseconde.

2. Dispositif suivant la revendication 1, caractérisé en ce que le circuit de coïncidence (25) comporte une bascule D (30) sur l'entrée de données (D) de laquelle agit le premier détecteur à seuil (23) et sur l'entrée d'horloge (C₁) de laquelle agit la sortie du deuxième détecteur à seuil (24).

3. Dispositif suivant la revendication 2, caractérisé en ce qu'une bascule monostable (29) déclenchée par les flancs positifs est connectée entre le premier détecteur à seuil (23) et l'entrée de données (D) de la bascule D (30) et une bascule monostable (32) déclenchée par les flancs négatifs est connectée entre l'entrée d'horloge (C₁) et une entrée de libération (C₂) de la bascule D (30).

4. Dispositif suivant l'une quelconque des revendications 1 à 3 comportant un interrupteur de puissance à haute tension (9) prévu dans un deuxième espace interne (6) comprenant au moins :
- un deuxième capteur optique (11) pour détecter les impulsions lumineuses d'arcs dans le deuxième espace interne (6);
- un deuxième guide de lumière (14) pour faire sortir les impulsions lumineuses détectées par le deuxième capteur (11) du deuxième espace interne (6), et
- un deuxième convertisseur optoélectronique (17) pour convertir les impulsions lumineuses sortantes en deuxièmes signaux électriques appliqués à l'unité d'évaluation (20),
caractérisé en ce que le montage de circuit comprend un troisième détecteur à seuil (22) commandé par l'amplitude des deuxièmes signaux électriques et un second élément de temporisation (26) monté en aval du troisième détecteur à seuil (22) et vérifiant la durée des deuxièmes signaux électriques.

5. Dispositif suivant la revendication 4 comportant un troisième espace interne (8) qui comprend au moins :
- un troisième capteur optique (13) pour détecter les impulsions lumineuses d'arcs dans le troisième espace interne (8);
- un troisième guide de lumière (16) pour faire sortir les impulsions lumineuses détectées par le troisième capteur (13) du troisième espace interne (8), et
- un troisième convertisseur optoélectronique (19) pour convertir les impulsions lumineuses sortantes en troisièmes signaux électriques appliqués à l'unité d'évaluation (20),
caractérisé en ce que le montage de circuit comporte un quatrième détecteur à seuil (21) commandé par l'amplitude des troisièmes signaux électriques.
